# FASCICULE DE BREVET EUROPEEN

(11) **EP 3 595 949 B1**
(45) Date de publication et mention de la délivrance du brevet: **28.04.2021**
(21) Numéro de dépôt: 18706800.2
(22) Date de dépôt: 06.02.2018
(51) Int. Cl.: B60T 13/52, B60T 13/72, B60T 17/22

(54) **PROCEDE DE CONTROLE DE FONCTIONS AUTOMATIQUES D'UN VEHICULE AUTOMOBILE**
VERFAHREN ZUR STEUERUNG VON AUTOMATISCHEN FUNKTIONEN IN EINEM FAHRZEUG
METHOD TO CONTROL AUTOMATIC FUNTIONS IN A VEHICLE

(30) Priorité: 15.03.2017 FR 1752117
(43) Date de publication de la demande: 22.01.2020
(73) Titulaire: Renault S.A.S., 92100 Boulogne-Billancourt (FR)
(72) Inventeur: SANCHEZ, Régis, 78120 Rambouillet (FR); GARNIER, Adrien, 44000 Nantes (FR)
(86) Numéro de dépôt international: PCT/FR2018/050290
(87) Numéro de publication internationale: WO 2018/167389

(56) Documents cités:
- DE-A1-102009 046 006
- US-A- 6 082 241
- US-A1- 2012 190 500
- US-A1- 2016 171 792

## Description

### Domaine technique

L'invention concerne le domaine des véhicules automobiles équipés de fonctions automatiques d'aide à la conduite, telles que le Régulateur de Vitesse (RV), Limiteur de Vitesse (LV) et les conduites automatiques (ACC, Traffic Jam assist...). Plus particulièrement, l'invention concerne un procédé de contrôle de telles fonctions. Par contrôle, on entend la possibilité de désactiver une fonction active lorsqu'une ou plusieurs conditions sont réunies.

### État de la technique

Un procédé du type mentionné ci-dessus est connu de US 6 082 241 A. Les fonctions automatiques d'aide à la conduite, comme le régulateur et le limiteur de vitesse sont proposées par de nombreux constructeurs automobiles et équipent de plus en plus de véhicules. De telles fonctions présentent un avantage certain pour le conducteur concernant sa sécurité, sa consommation de carburant et/ou son confort.

Par exemple, le régulateur et le limiteur de vitesse permettent un usage optimal de la consommation de carburant, notamment sur longues distances et permettent d'éviter les excès de vitesse.

Le limiteur de vitesse permet au conducteur de choisir lui-même la vitesse maximale qu'il souhaite ne pas dépasser. Si le conducteur tente d'aller au-delà de la vitesse qu'il a programmée, la pédale d'accélérateur devient inactive. Le régulateur de vitesse permet au conducteur de choisir une vitesse de croisière que la voiture va maintenir constante sans que le conducteur n'ait à toucher à l'accélérateur.

Généralement, un certain nombre de sécurités est associé à une fonction automatique. Par exemple, une fonction ne s'enclenche pas seule et, lorsqu'elle est activé, une action sur la pédale de freins, l'embrayage - pour les boîtes de vitesses manuelles- ou le levier de vitesses désactive immédiatement la fonction et fait repasser le véhicule en mode de conduite traditionnel.

Cependant, sur certains véhicules récents, il a été constaté qu'il est parfois difficile de désactiver une fonction automatique d'aide à la conduite par simple appui sur la pédale de frein.

Cela concerne en particulier les fonctions automatiques d'aide à la conduite nécessitant un certain niveau de dépression, telles que : Régulateur de Vitesse (RV), Limiteur de Vitesse (LV) et conduites automatiques (ACC, Traffic Jam assist...) .

Il s'agit de garantir que la pédale de frein ne devienne pas dure pendant un roulage pour ne pas gêner la désactivation de la fonction et assurer ainsi la transition vers le mode de conduite traditionnelle en toute sécurité.

Par exemple, il a été constaté que la pédale de frein devient parfois dure pendant un roulage au Régulateur de Vitesse / Limiteur de Vitesse, ce qui peut empêcher de désactiver cette fonction et de retrouver une conduite traditionnelle.

L'objectif de l'invention est de proposer un moyen de contrôle d'une fonction d'aide à la conduite activée en vue de la désactiver lorsque certaines conditions nécessitant sa désactivation sont réunies.

### Description de l'invention

L'invention a pour objet un procédé de contrôle d'une fonction automatique d'aide à la conduite d'un véhicule automobile nécessitant un certain niveau de dépression dans un système d'assistance de freinage, le procédé comportant les étapes suivantes :
- surveiller de façon continue un niveau de dépression dans le système d'assistance de freinage ;
- si le niveau de dépression est inférieur à une valeur seuil Vs prédéterminée, désactivation de ladite fonction automatique par un système de contrôle.

Une analyse a permis de comprendre que la sensation de pédale dure empêchant de désactiver une fonction automatique peut être causée par un niveau de dépression faible dans le système d'assistance de freinage dû à une défaillance, telle qu'une fuite dans le système d'assistance de freinage.

Ainsi, la surveillance du niveau de dépression dans le système d'assistance de freinage permet de détecter la présence d'une défaillance dans ce système si la dépression est inférieure à une certaine valeur seuil fixée de sorte que le système désactive la fonction automatique et rend la main au conducteur avant que la pédale de frein ne devienne dure.

Selon une réalisation de l'invention, la valeur seuil est déterminée expérimentalement. Ainsi des tests sont réalisés en baissant le niveau de dépression dans le système d'assistance au freinage pour voir à partir de quelle valeur limite la pédale de frein devient dure. Le seuil est fixé avec une certaine marge de sécurité de la valeur limite pour permettre au système de désactiver la fonction. La marge de sécurité est par exemple de 100 millibars.

Selon une réalisation de l'invention, la surveillance du niveau de dépression se fait par un capteur de pression. L'ajout d'un capteur de pression présente l'avantage d'être une solution simple et peu couteuse.

Avantageusement, lorsque le niveau de dépression est inférieur à une valeur seuil prédéterminée le système envoie une alerte de niveau de dépression faible. Cette alerte peut être sonore et/ou visuelle, et informe le conducteur de l'existence d'une défaillance.

Selon une réalisation de l'invention, la fonction automatique d'aide à la conduite est une fonction de régulateur de vitesse (RV) ou de limiteur de vitesse (LV).

L'invention concerne également un véhicule automobile comprenant des moyens mettant en œuvre un procédé tel que décrit ci-dessus.

### Brève description des figures

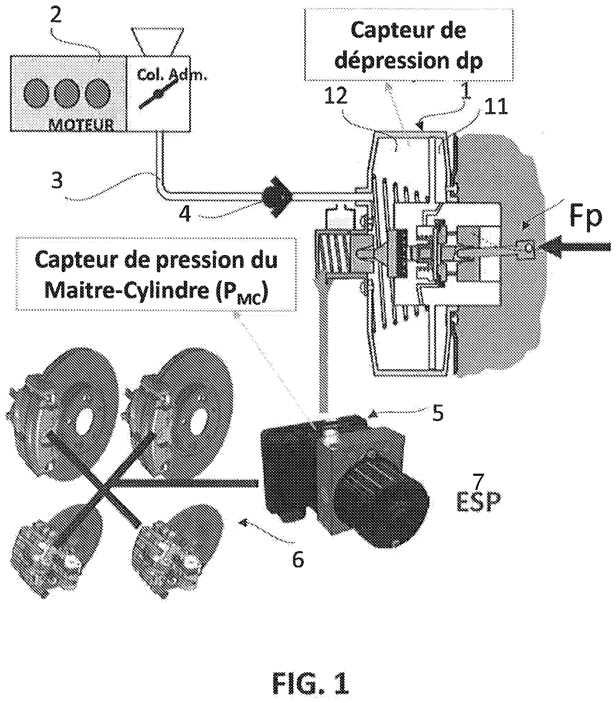

L'invention sera mieux comprise et d'autres particularités et avantages apparaîtront à la lecture de la description qui va suivre en référence à la figure 1 annexée qui illustre un exemple de réalisation de l'invention dans laquelle un capteur de dépression permet de surveiller le niveau de dépression dans l'assistance au freinage.

### DESCRIPTION DÉTAILLÉE

Sur la figure 1 est représenté un dispositif d'assistance de freinage (Servo-Frein) 1 d'un véhicule, non représenté, comprenant une première chambre 11 soumise à la pression atmosphérique et une deuxième chambre 12 soumise à une dépression exercée par le moteur 2 auquel cette deuxième chambre est reliée par une conduite 3 munie d'une valve 4 à clapet anti-retour. Le dispositif 1 est en outre relié à un maitre-cylindre 5 qui commande le système de freinage 6 du véhicule. Le maitre-cylindre peut être, par ailleurs, relié à un stabilisateur de trajectoire (ESP) 7 et à un capteur (PMC) mesurant la pression hydraulique en sortie du maître-cylindre.

Selon le mode de réalisation de l'invention illustré, un capteur de dépression est disposé sur le dispositif d'assistance au freinage et relié au système de contrôle. Ce capteur de dépression mesure de façon instantanée le niveau de vide relatif dans la chambre de dépression 12, notamment lorsqu'une fonction automatique d'aide à la conduite est activée. Une telle fonction peut être, par exemple, le Régulateur de Vitesse (RV), le Limiteur de Vitesse (LV) ou une conduite automatique (ACC, Traffic Jam assist...) .

Si le capteur de dépression détecte lors d'un roulage que le niveau de dépression dans la chambre de dépression 12 est inférieur à une valeur seuil prédéterminée, le système de contrôle désactive alors automatiquement la fonction concernée pour rendre la main au conducteur avant que la pédale de frein devienne dure. De cette manière, le risque que le conducteur ne puisse pas retrouver une conduite traditionnelle pour cause de pédale de frein dure est réduit.

De plus, pour assurer un temps de réponse au système de contrôle en vue de la désactivation de la fonction automatique, la valeur seuil est fixée avec une certaine marge de sécurité, par exemple de 100 millibars.

Une des façons possibles de déterminer la valeur seuil est de réaliser des expériences en baissant la dépression dans la chambre de dépression 12 jusqu'à à une valeur V1 pour laquelle la pédale de frein devient dure. Dans ce cas, la valeur seuil Vs est V1-100 millibar.

La valeur Vs peut être déterminée par d'autres façons, par exemple par simulation.

Avantageusement, parallèlement à la désactivation de la fonction automatique, le système de contrôle envoie une alerte de niveau de dépression faible. De sorte que le conducteur se rende compte de l'existence d'un problème, tel qu'une fuite, et fasse faire une vérification de son véhicule.

L'invention porte également sur un véhicule comprenant des moyens, tels que le capteur de dépression et le système de contrôle, mettant en œuvre le procédé décrit ci-dessus.

## Revendications

1. Procédé de contrôle d'une fonction automatique d'aide à la conduite d'un véhicule automobile nécessitant un certain niveau de dépression dans un système d'assistance de freinage, **caractérisé en ce qu'**il comporte les étapes suivantes :
- surveiller de façon continue un niveau de dépression dans le système d'assistance de freinage ;
- si le niveau de dépression est inférieur à une valeur seuil (Vs) prédéterminée, désactivation de ladite fonction automatique par un système de contrôle.

2. Procédé de contrôle selon la revendication 1, **caractérisé en ce que** la valeur du seuil (Vs) est déterminée expérimentalement.

3. Procédé de contrôle selon l'une des revendications 1 et 2, **caractérisé en ce que** la surveillance du niveau de dépression se fait par un capteur de pression.

4. Procédé de contrôle selon l'une des revendications 1 à 3, **caractérisé en ce que** le système envoie une alerte de niveau de dépression faible.

5. Procédé de contrôle selon l'une des revendications 1 à 4, **caractérisé en ce que** la fonction automatique d'aide à la conduite est une fonction de régulateur de vitesse (RV) ou de limiteur de vitesse (LV).

6. Véhicule automobile comprenant des moyens mettant en œuvre un procédé selon l'une quelconque des revendications 1 à 5.

## Patentansprüche

1. Verfahren zur Steuerung einer automatischen Fahrassistenzfunktion eines Kraftfahrzeugs, die ein bestimmtes Unterdruckniveau in einem Bremsassistenzsystem erfordert, **dadurch gekennzeichnet, dass** es die folgenden Schritte umfasst:
- kontinuierliches Überwachen eines Unterdruckniveaus in dem Bremsassistenzsystem;
- falls das Unterdruckniveau niedriger als ein vorbestimmter Schwellenwert (Vs) ist, Deaktivierung der automatischen Funktion durch ein Steuerungssystem.

2. Verfahren zur Steuerung nach Anspruch 1, **dadurch gekennzeichnet, dass** der Schwellenwert (Vs) experimentell bestimmt wird.

3. Verfahren zur Steuerung nach einem der Ansprüche 1 und 2, **dadurch gekennzeichnet, dass** die Überwachung des Unterdruckniveaus durch einen Drucksensor erfolgt.

4. Verfahren zur Steuerung nach einem der Ansprüche 1 bis 3, **dadurch gekennzeichnet, dass** das System eine Warnmeldung für niedriges Unterdruckniveau sendet.

5. Verfahren zur Steuerung nach einem der Ansprüche 1 bis 4, **dadurch gekennzeichnet, dass** die automatische Fahrassistenzfunktion eine Geschwindigkeitsreglerfunktion (GR) oder Geschwindigkeitsbegrenzerfunktion (GB) ist.

6. Kraftfahrzeug, welches Mittel umfasst, die ein Verfahren nach einem der Ansprüche 1 bis 5 durchführen.

## Claims

1. Method for controlling an automatic driver assistance function of a motor vehicle requiring a certain level of vacuum in a brake assist system, **characterized in that** it includes the following steps:
- continuously monitoring a level of vacuum in the brake assist system;
- if the level of vacuum is below a predetermined threshold value (Vt), deactivation of said automatic function by a control system.

2. Control method according to Claim 1, **characterized in that** the value of the threshold (Vt) is determined experimentally.

3. Control method according to either of Claims 1 and 2, **characterized in that** the level of vacuum is monitored by a pressure sensor.

4. Control method according to one of Claims 1 to 3, **characterized in that** the system sends a low vacuum level alert.

5. Control method according to one of Claims 1 to 4, **characterized in that** the automatic driver assistance function is a cruise control (CC) or speed limiter (SL) function.

6. Motor vehicle comprising means implementing a method according to any one of Claims 1 to 5.
